# EUROPEAN PATENT APPLICATION

(11) **EP 2 910 774 A1**
(43) Date of publication of application: **26.08.2015**
(21) Application number: 13846163.7
(22) Date of filing: 20.09.2013
(51) Int. Cl.: F03D 3/04

(54) **WIND-POWER GENERATION DEVICE**

(30) Priority: 10.10.2012 JP 2012225271
(71) Applicant: Sun Design Office Co. Ltd., Fukuoka 810-0022 (JP)
(72) Inventor: SHIRAISHI, Masahiro, Fukuoka-shi Fukuoka 810-0022 (JP); TANABE, Tadao, Fukuoka-shi Fukuoka 810-0022 (JP)
(74) Representative: Portch, Daniel
(86) International application number: PCT/JP2013/075432
(87) International publication number: WO 2014/057789

(57) **Abstract**

The purpose of the present invention is to provide a wind power generating device that can send wind at a sufficient speed to a wind turbine through a vertically extending wind tunnel tube and can generate a sufficient amount of power. The wind power generating device 10 is provided with a tubular wind tunnel tube 30 having a bottom end closed, being provided with a wind outlet 32 at a top end and being provided with a plurality of openings horizontally and vertically over an entire circumferential area of a peripheral wall, a plurality of openable windows 52 having the openings placed in open states by a wind received from an outside of the wind tunnel tube 30 and having the openings placed in closed states by a wind received from an inside of the wind tunnel tube 30, a wind turbine 60 being positioned on an upper side of the wind tunnel tube 30 and being made to face the outlet 32, and a power generator being made to generate power by the rotation of the wind turbine 60.

## Description

### [Technical Field]

The present invention relates to a wind power generating device.

### [Background Art]

The Patent Literature 1 (herein after referred to as "PLT 1") as listed below teaches a wind power generating device which comprises a tubular wind tunnel extending in the vertical direction. In the wind power generating device described in PTL 1, the peripheral wall of the above wind tunnel is provided with a wind inlet which allows for communication of wind from only the outside to the inside of the wind tunnel and a guide which guides downward the wind taken into the wind tunnel. Thus, the wind blown out from the outlet at the bottom end of the wind tunnel rotates the wind turbine (turbine) to drive the power generator with the rotation of the wind turbine.

### [Citation List]

### [Patent Literature]

[PTL 1] International Publication No. WO 2008/075676 pamphlet

### [Summary of Invention]

### [Problem to be solved]

However, the inventors and the like of the present invention performed an experiment for confirming the effect of the above wind power generating device and found that the wind power generating device could not generate sufficient power. The reason for this is considered to be such as because the wind could not be sent to the wind turbine at a sufficient wind velocity since an attempt was made to send the wind from the upper side of the wind tunnel to a lower side of the wind tunnel of a higher pressure.

The present invention has been made in view of such circumstances, and an objective thereof is to provide a wind power generating device which sends the wind at a sufficient wind velocity to the wind turbine through the wind tunnel extending in the vertical direction and which can generate sufficient power.

### [Solution to Problem]

In order to achieve the foregoing objective, a wind power generating device according to the preset invention includes a tubular wind tunnel tube being provided with a plurality of wind inlets horizontally and vertically over an entire circumferential area of a peripheral wall, having a bottom end closed, and being provided with a wind outlet at a top end, a plurality of openable windows having the inlets placed in open states by a wind received from an outside of the wind tunnel tube and having the inlets placed in closed states by a wind received from an inside of the wind tunnel tube, a wind turbine being positioned on an upper side of the wind tunnel tube and being made to rotate by a wind blowing out from the outlet, and a power generator being made to generate power by the rotation of the wind turbine.

Further, the wind power generating device according to the present invention includes a tubular wind tunnel tube being provided with a plurality of wind inlets horizontally and vertically from a bottom part to a top part over an entire circumferential area of a peripheral wall, having a bottom end closed, and being provided with a wind outlet at a top portion, a plurality of openable windows being moved around horizontal shafts to inclined positions with upper sides coming to an inside of the wind tunnel tube to place the inlets in open states by a wind received from an outside of the wind tunnel tube and having the inlets placed in closed states by a wind received from the inside of the wind tunnel tube, a pair of wind turbines being positioned side by side above the outlet and made to rotate about horizontal shafts by a wind that has blown out from the outlet, and a power generator being made to generate power by the rotation of the pair of wind turbines, wherein an upper part of the pair of wind turbines is open such that the wind that has blown out from the outlet blows through upward.

In the aforementioned wind power generating device a rain cover is provided over the pair of wind turbines in a manner allowing the wind that has blown out from the outlet to blow through obliquely upward.

Further, the wind power generating device according to the present invention includes a tubular wind tunnel tube being provided with a plurality of wind inlets horizontally and vertically over an entire circumferential area of a peripheral wall, having a bottom end closed, and being provided with a wind outlet at a top end, a plurality of openable windows being moved around horizontal shafts to inclined positions with upper sides coming to an inside of the wind tunnel tube to place the inlets in open states by a wind received from an outside of the wind tunnel tube and having the inlets placed in closed states by a wind received from the inside of the wind tunnel tube, a wind turbine being positioned on an upper side of the wind tunnel tube and being made to rotate by a wind blowing out from the outlet, and a power generator being made to generate power by the rotation of the wind turbines the wind power generating device further including a rotation shaft being horizontally positioned to an inner face on a lower side of the openable window and supporting the openable window in a rotatable manner, a rotational movement limiting member being positioned on an inner side as well as on an upper side in the wind tunnel tube with regard to the rotation shaft, and being made to stop at an open position a rotational movement of the openable window from a closed position, and a weight being attached to a lower part of an outer face of the openable window with a bottom end being located on a side lower than a bottom end of the openable window, and being made to stop at the closed position a rotational movement of the openable window from the open position by a lower part coming into contact with a bottom edge of the inlet and being made to rotate the openable window from the open position to the closed position by a self-weight.

In the wind power generating device, a wind communication opening may be provided to a vane of the wind turbine. Further, the wind power generating device may be provided with a wind guide part that is provided in a periphery of the wind tunnel tube and is made to guide a wind to the plurality of inlets.

### [Advantageous Effects of Invention]

According to the present invention, there can be provided a wind power generating device which sends the wind at a sufficient wind velocity to the wind turbine through the wind tunnel extending in the vertical direction and which can generate sufficient power.

### [Brief Description of Drawings]

[Fig. 1] Fig. 1 is a vertical sectional diagram (sectional diagram taken along line 1-1 of Fig. 2) illustrating a wind power generating device 10 according to one embodiment.
[Fig. 2] Fig. 2 is a sectional diagram (vertical sectional diagram) taken along line 2-2 of Fig. 1.
[Fig. 3] Fig. 3 is a sectional diagram (cross sectional diagram) taken along line 3-3 of Fig. 1.
[Fig. 4] Fig. 4 is a vertical diagram illustrating an enlarged view of a wind inlet part.
[Fig. 5] Fig. 5 is a sectional diagram (vertical sectional diagram) taken along line 5-5 of Fig. 4.
[Fig. 6] Fig. 6 is a sectional diagram (cross sectional diagram) taken along line 6-6 of Fig. 4.
[Fig. 7] Fig. 7 is a vertical diagram illustrating an enlarged view of a pair of wind turbines.
[Fig. 8] Fig. 8 is a sectional diagram taken along line 8-8 of Fig. 7.
[Fig. 9] Fig. 9 is a vertical sectional diagram indicating the actions of the wind power generating device according to the present embodiment.
[Fig. 10] Fig. 10 is a vertical sectional diagram indicating the actions of the wind power generating device according to the present embodiment.
[Fig. 11] Fig. 11 is a diagram illustrating a scene of a model test.
[Fig. 12] Fig. 12 is a table providing a summary of the measurement results of the model test.
[Fig. 13] Fig. 13 is a graph providing a summary of the measurement results obtained at measuring point C.
[Fig. 14] Fig. 14 is a table providing a summary of the average values obtained at measuring points A to C and fluctuation rates of the wind velocities obtained between the measuring points.
[Fig. 15] Fig. 15 is a vertical sectional diagram illustrating an upper portion of the wind power generating device according to another embodiment.

### [Description of Embodiments]

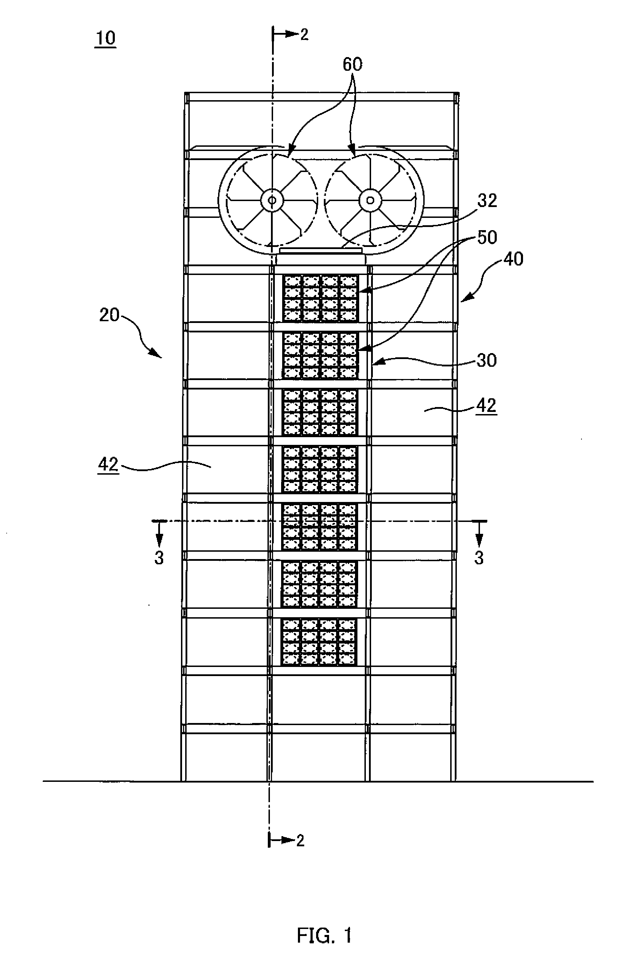

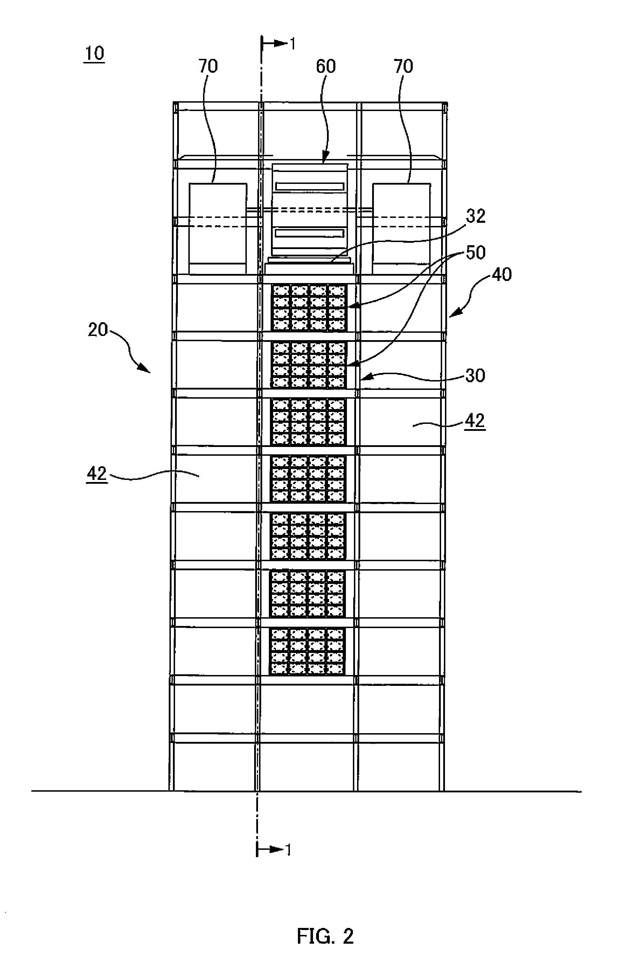

One embodiment of the present invention will be described with reference to the drawings in the following. Fig. 1 is a vertical sectional diagram (sectional diagram taken along line 1-1 of Fig. 2) illustrating a wind power generating device 10 according to one embodiment, and Fig. 2 is a sectional diagram (vertical sectional diagram) taken along line 2-2 of Fig. 1. As illustrated in these drawings, the wind power generating device 10 includes a tower body 20 extending vertically upward from the ground and a pair of wind turbines 60 and a pair of power generators 70 placed on the top portion of the tower body 20.

The tower body 20 includes a wind tunnel tube 30 in a square tubular form, a wind guide part 40 provided at the periphery of the wind tunnel tube 30, and wind inlet parts 50 provided to be vertically arranged to each of the four faces of the wind tunnel tube 30. The overall height of the tower body 20 is about 60 meters. An outlet 32 is provided to the top part of the wind tunnel tube 30 and a pair of wind turbines 60 is positioned to face this outlet 32 so that the wind taken in from the wind inlet parts 50 into the wind tunnel tube 30 is blown out from the outlet 32 toward the pair of wind turbines 60. Additionally, the top part of the tower body 20 is opened so that the wind blown out from the outlet 32 blows through upward.

The wind guide part 40 is a multi-floor structure configured of a combination of frames and panels, and wind guide openings 42 that guide the wind to the wind tunnel tube 30 are formed to each floor of the wind guide part 40. Additionally, the wind inlet parts 50 are arranged on the peripheral wall face of the wind tunnel tube 30 in a manner facing the wind guide openings 42 on each floor. Each of the wind inlet parts 50 are configured in an openable/closable manner such that wind inlet parts 50 would be opened by the wind guided (collected) from the wind guide openings 42 to the peripheral wall faces of the wind tunnel tube 30 but would not open by the wind taken into the wind tunnel tube 30. The wind inlet parts 50 here, are arranged from the first to the highest floor (seventh floor), that is, from the lower part to the upper part of the wind tunnel tube 30.

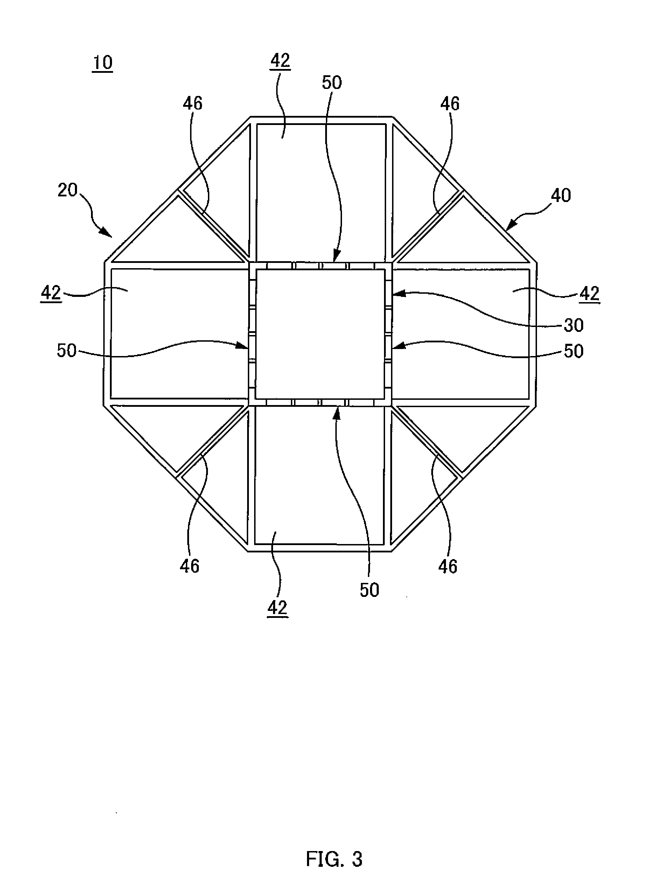

Fig. 3 is a sectional diagram (cross sectional diagram) taken along line 3-3 of Fig. 1. As illustrated in this figure, the tower body 20 is configured with the wind tunnel tube 30 of a square section form positioned at the center of the wind guide part 40 of an octagonal section form. The wind guide part 40 includes a partitioning plate 46 which partitions each floor in the circumferential direction. This partitioning plate 46 is a square panel positioned on a line continuing from the diagonal line of the wind tunnel tube 30, and has its vertical side on the inner circumferential side joined to the corner part of the wind tunnel tube 30.

In other words, the space partitioned by the pair of the right and left partitioning plates 46 becomes the wind guide opening 42. This wind guide opening 42 is configured such that the width in the horizontal direction decreases when proceeding from the outer circumferential side toward the inner circumferential side so to thereby guide the wind (collect the wind) to the wind inlet parts 50.

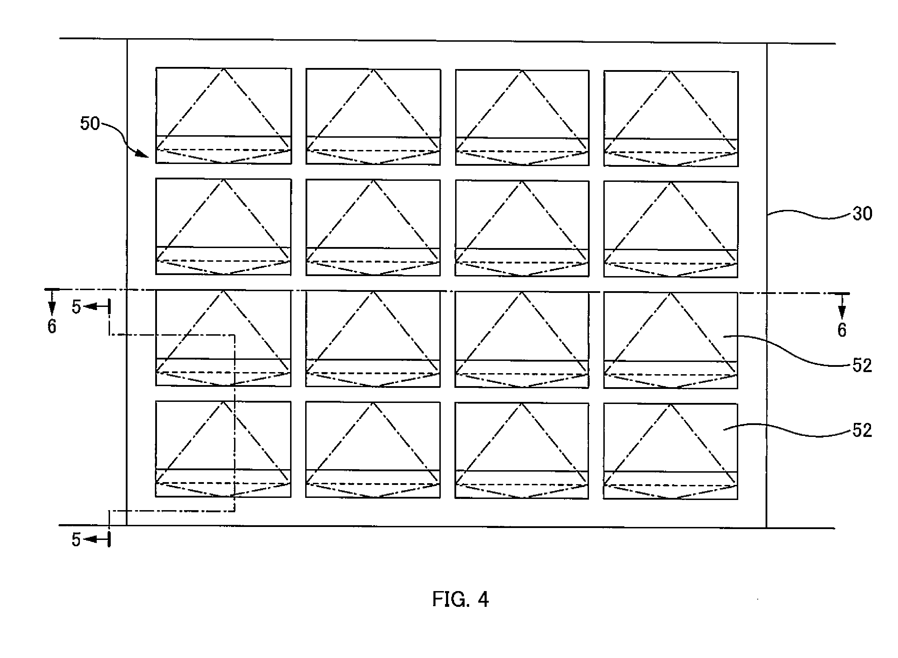

Fig. 4 is a vertical diagram illustrating an enlarged view of the wind inlet part 50. As shown in Figs. 3 and 4, the wind inlet parts 50 are provided with four rows and columns of square openable windows 52. And the wind is allowed to flow into the wind tunnel tube 30 by opening the openable windows 52 and the wind is blocked from flowing into and out from the wind tunnel tube 30 by closing the openable windows 52.

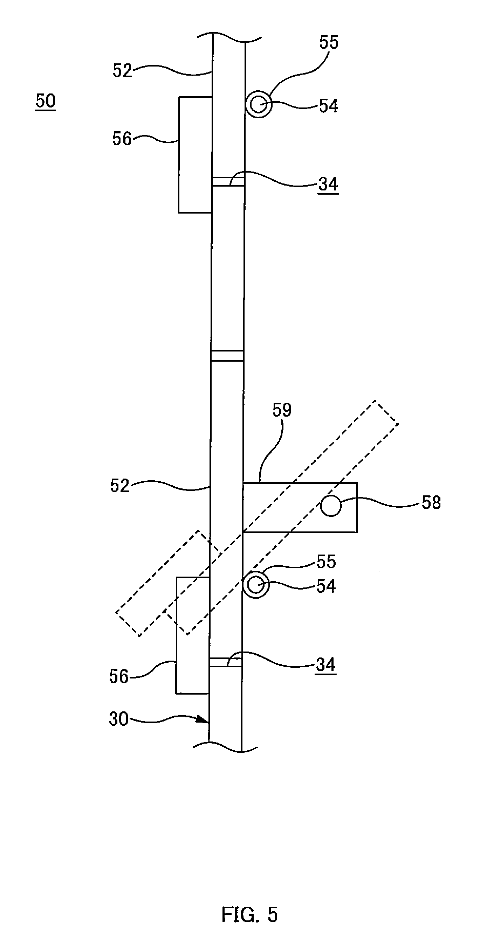

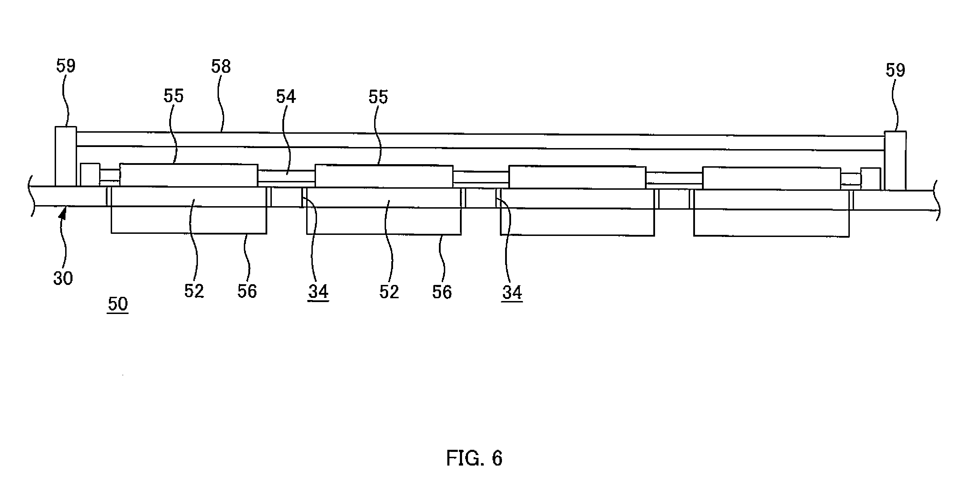

Fig. 5 is a sectional diagram (vertical sectional diagram) taken along line 5-5 of Fig. 4 and Fig. 6 is a sectional diagram (cross sectional diagram) taken along line 6-6 of Fig. 4. As shown in these drawings, on the wall faces of the wind tunnel tube 30, four rows and columns of square openings 34 are formed for each wind guide opening 42, and an openable window 52 is placed for each opening 34.

The inner wall faces of the wind tunnel tube 30 have four support shafts 54 mounted horizontally and parallel to each other for each of the wind guide openings 52. Each support shaft 54 is positioned to have an overlap with the four openings 34 deployed in each row. And each support shaft 54 is positioned on the lower side of the opening 34 and a bearing 55 is mounted on the lower side in the back face of the openable window with the support shaft 54 inserted through the bearing 55. Hereby, the openable window 52 is supported by the peripheral wall of the wind tunnel tube 30 via the bearing 55 and the support shaft 54 in a manner rotatable around a horizontal axis.

Further, a weight 56 is attached to the lower part of the openable window 52. The bottom end of the weight 56 is located below the bottom end of the openable window 52, and when the openable window 52 moves to rotate in the closing direction due to the weight of the weight 56 or the wind power received by the back face, the bottom part of the weight 56 comes into contact with the lower edge of the opening 34. Hereby, the openable window 52 is maintained in an erected position.

Furthermore, four shafts 58 are mounted horizontally and parallel to each other for each wind guide opening 42 on the inner wall face of the wind tunnel tube 30. Each shaft 58 is positioned to overlap the four openings 34 in each row and the two sides of the shaft 58 are supported to the inner wall face of the wind tunnel tube 30 via the bracket 59. Additionally, each shaft 58 is located at the center of the opening 34 in the height direction and on the inner side of the support shaft 54 and inside the wind tunnel tube 30.

When the wind from the wind guide opening 42 is not blowing against the openable window 52 in the wind inlet part 50, the openable window 52 is maintained in a closed state with the force by the weight of the weight 56 acting in the closing direction. Further, the openable window 52 is maintained in a closed state with the wind power when the wind from the inside of the wind tunnel tube 30 is blowing against the back face of the openable window 52. On the other hand, the openable window 52 is maintained in an open state with the wind power when the wind from the wind guide opening 42 side is blowing against the openable window 52. During the above state, the back side of the openable window 52 comes into contact with the shaft 58 and the openable window 52 is maintained in an inclined position with the upper side coming inside the wind tunnel tube 30.

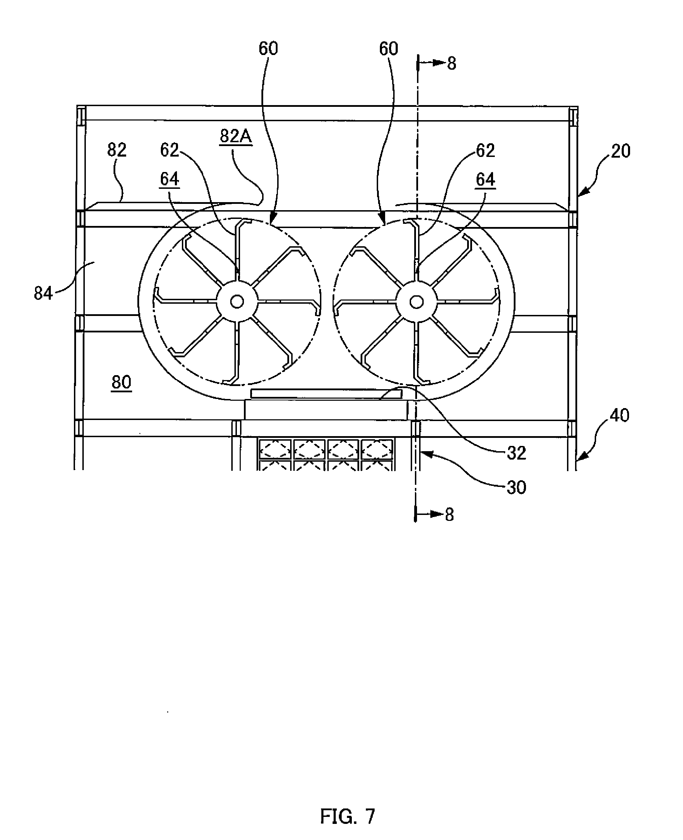

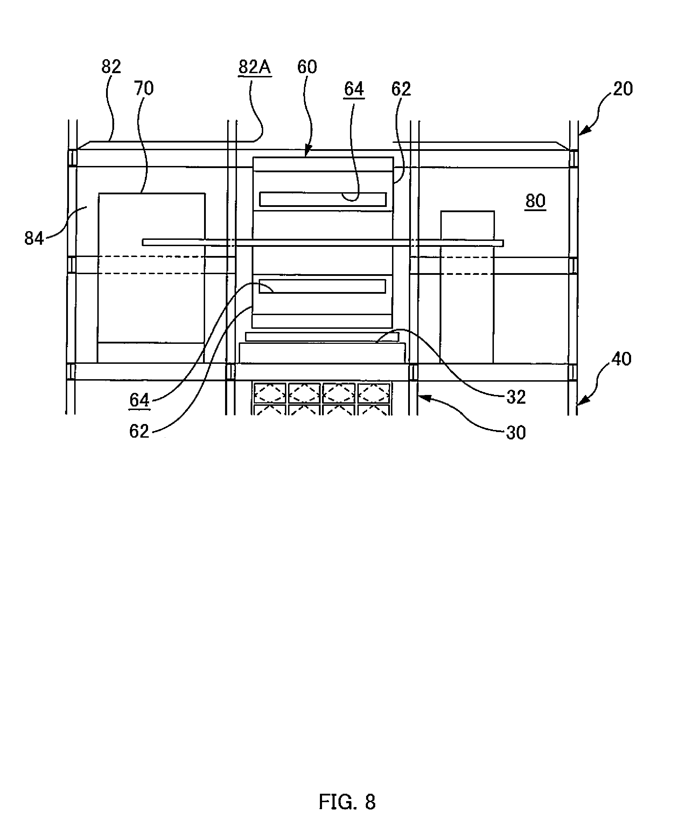

Fig. 7 is a vertical diagram illustrating an enlarged view of a pair of wind turbines 60 and Fig. 8 is a sectional diagram taken along line 8-8 of Fig. 7. As illustrated in these drawings, the pair of wind turbines 60 is arranged side by side over the outlet 32 of the wind tunnel tube 30. The rotation shafts of the pair of wind turbines 60 are positioned at the same height and the middle of the rotation shafts of the pair of wind turbines 60 is positioned to match the shaft center of the wind tunnel tube 30.

The wind turbines 60 are provided with a plurality of vanes 62 extending in the direction from the rotation axis toward the outside diameter. The tip end of the vane 62 is bent reverse the direction of rotation. And the rear end side of the vane 62 has formed an opening 64 that expands from the one end side to the other end side in the width direction (direction parallel to the rotation shaft). Additionally, the distance between the rotation shafts of the pair of wind turbines 60 is set so that the two radiuses of gyration do not overlap each other. In other words, a space where wind can flow through is formed between the tip end of a vane 62 of one of the wind turbines 60 and the tip end of a vane 62 of the other of the wind turbines 60, in the area between the rotation shafts of the pair of wind turbines 60.

Further, the rotation shafts of each of the wind turbines 60 are connected to a respective power generator 70 and the generators 70 are driven to generate power by the rotational force of the wind turbines 60. The power generator 70 is placed in a power generator room 80 which is provided with a roof 82 and peripheral walls 84. The roof 82 is provided with an opening 82A which becomes the path of the wind that has blown through between the pair of wind turbines 60.

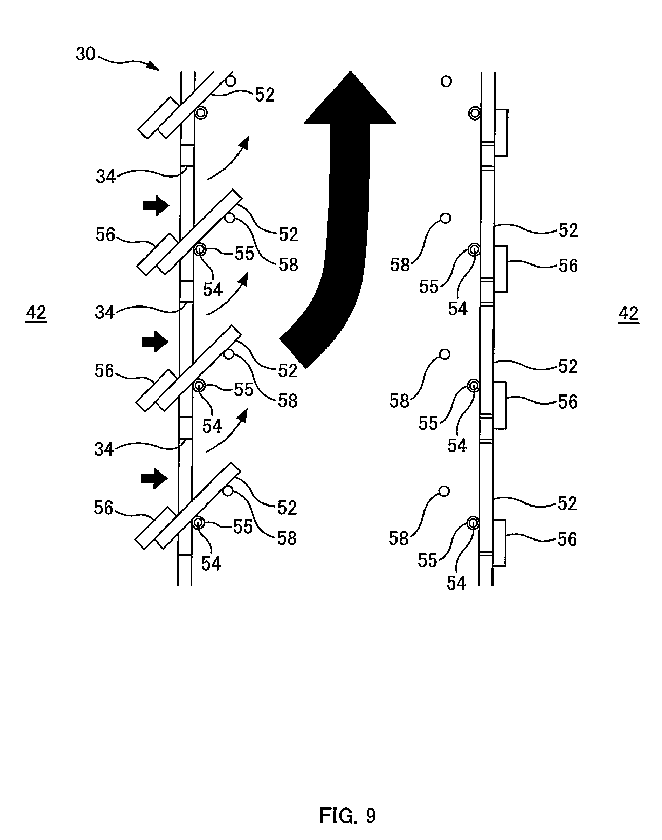

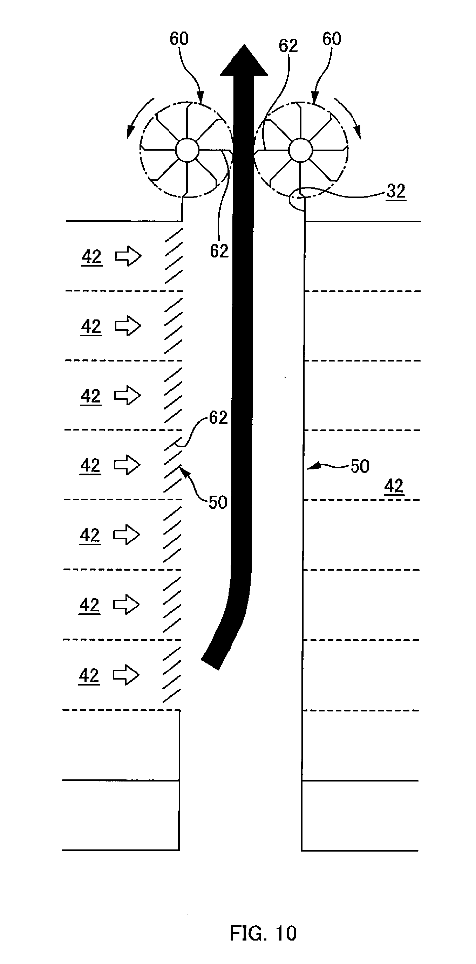

Figs. 9 and 10 are vertical sectional diagrams indicating the actions of the wind power generating device 10 according to the present embodiment. As shown in Fig. 9, when the wind blows from a certain direction toward the wind power generating device 10, the wind is guided from the wind guide openings 42 which is opened to the windward direction toward the wind inlet parts 50 so that the openable windows 52 of the wind inlet parts 50 are opened by the wind power and wind is taken into the wind tunnel tube 30. At this time, the openable windows 52 of the wind inlet parts 50 on the other three sides receive the wind power from their back sides but are maintained in erected positions, that is, in closed states with the weights 56 coming into contact with the lower edge of the openings 34.

Here, as shown in Fig. 10, since the bottom end of the wind tunnel tube 30 is closed and the outlet 32 at the top end is open, the wind taken in from the wind inlet parts 50 on the first to the highest floor into the wind tunnel tube 30 is collected to rise and be blown out from the outlet 32. And the wind that has blown out from the outlet 32 flows through a gap between the tip ends of the vanes 62 of the pair of wind turbines 60 and the openings 64 (see Figs. 7 and 8) on the rear end sides of the vanes 62 to blow upward through the top part of the tower body 20. At this time, the wind turbines 60 rotate with the wind power received by the vanes 62 to drive the power generators 70 (see Figs. 2 and 8) with their rotational force thereby generating power.

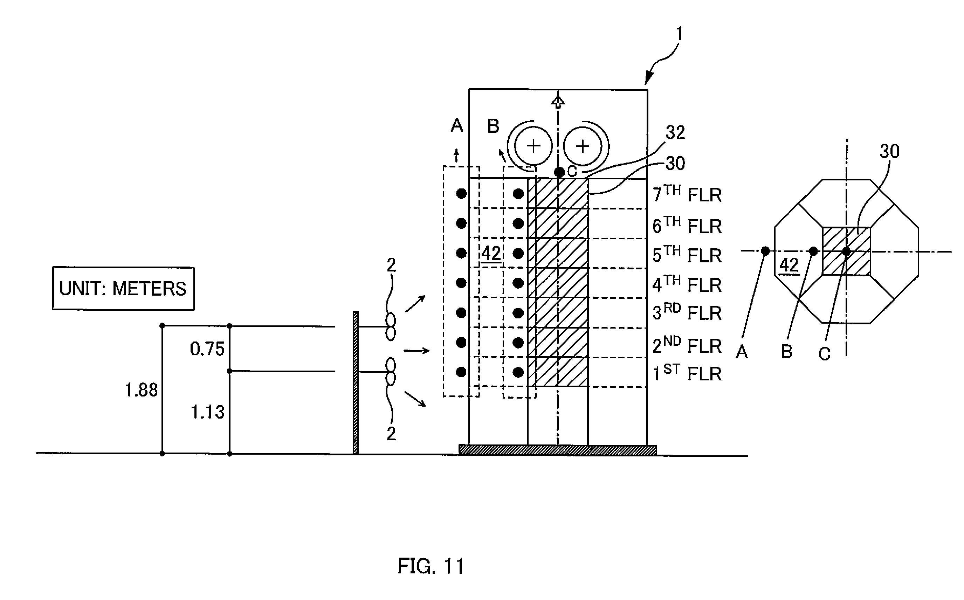

Fig. 11 is a diagram illustrating a scene of a model test. As shown in this figure, a one-twentieth scale model 1 (e.g. approximately three meters high) of the wind power generating device 10 was made, wind was blown toward this model 1 by using the fan 2 and the wind velocity was measured at predetermined measuring points A to C. The diameter of the fan 2 was 0.45 meters and two fans 2 were set one over the other at a location 1. 6 meters from the outer circumference of the model 1. The height of the rotation shaft of the lower level fan 2 was 1.13 meters and the height of the rotation shaft of the higher level fan 2 was 1.88 meters. Measuring points A were set to the entrances of the wind guide openings 42, measuring points B were set to the entrances (proximate the outer wall) of the wind tunnel tube 30 and measuring point C was set to the outlet 32 of the wind tunnel tube 30.

Further, the openable windows 52 on the floors below the floor where the measurements were taken were in closed states while the openable windows 52 on the floors on and above the floor where the measurements were taken were in open states. For example, the openable windows 52 (see Fig. 4 etc.) on the first to sixth floors were in closed states and the openable windows 52 on the seventh floor were in open states, when measurements were taken on the seventh floor. For another example, the openable windows 52 on the first to fifth floors were in closed states and the openable windows 52 on the sixth and seventh floors were in open states, when measurements were taken on the sixth floor. For yet another example, the openable windows 52 on the first to fourth floors were in closed states and the openable windows 52 on the fifth to seventh floors were in open states, when measurements were taken on the fifth floor. Note that, the all the openable windows 52 of all floors are in open states when measurements were taken on the first floor.

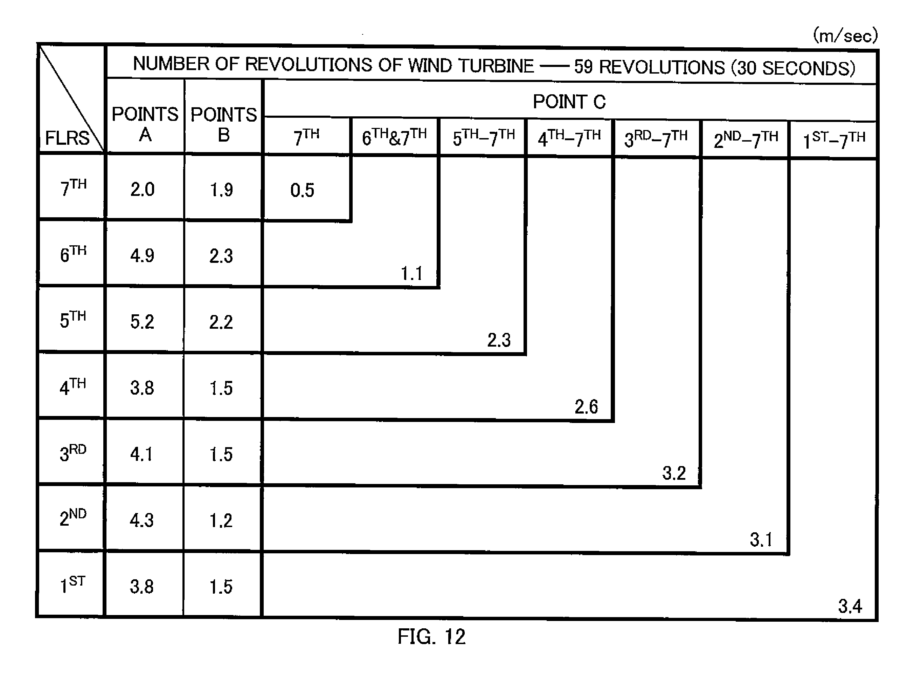

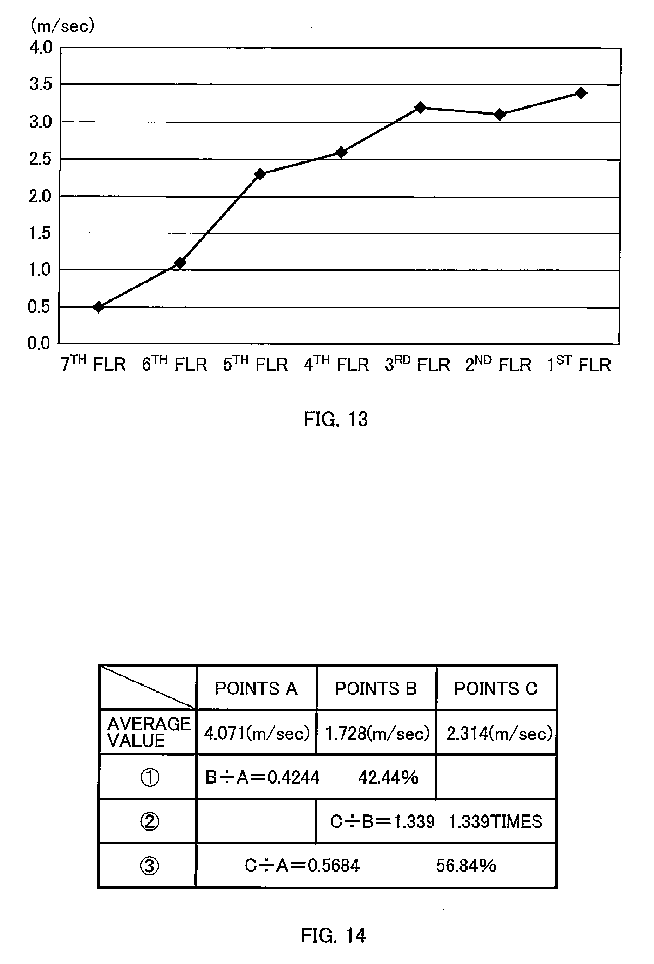

Fig. 12 is a table providing a summary of the measurement results of the model test. Additionally, Fig. 13 is a graph providing a summary of the measurement results at measuring point C. As shown in the table and the graph, the wind velocity at the outlet 32 of the wind tunnel tube 30 was confirmed to increase along with the descending of the floor where there measurements were taken. In other words, as the area of the openable windows 52 which were open below had increased, the amount of wind taken into the wind tunnel tube 30 had increased thereby.

Fig. 14 is a table providing a summary of fluctuation rates of the average values obtained at measuring points A to C and the wind velocities obtained between the measuring points. As shown in this table, the wind velocity at the entrances of the wind guide openings 42 (measuring points A) was reduced to 42.44% at the entrances of the wind tunnel tube 30 (measuring points B). However, the wind velocity at the outlet 32 (measuring point C) was increased to 1.339 times the wind velocity at the entrance of the wind tunnel tube 30. From the above, it can be understood that although the wind velocity is reduced when the wind is taken into the wind tunnel tube 30, the wind velocity is increased by the wind that has been taken in from the wind inlet parts 50 on the plurality of floors and into the wind tunnel tube 30 being collected and raised up to the outlet 32. Note that, the average wind velocity value at the outlet 32 is 56.84% of the average wind velocity value at the entrances of the wind guide openings 42, however, for example, the wind velocity at the outlet 32 can be raised to a sufficient level by increasing the number of floors that have the openable windows 52 open, as in the case where the average wind velocity value was 89.47% when the openable windows 52 on the first to seventh floors were in open states.

As described herein above, the wind power generating device 10 according to the present invention includes a tubular wind tunnel tube 30 which has the bottom end closed, the wind outlet 32 formed at the top end, and a plurality of openings 34 formed over the entire circumferential area horizontally and vertically from the bottom to the top parts of the peripheral walls, a plurality of openable windows 52 which rotates around the horizontal shaft by the wind received from outside the wind tunnel tube 30 to open the openings 34 to an inclined position where the upper sides come inside the wind tunnel tube 30 and places the openings 34 in closed states by the wind received from inside the wind tunnel tube 30, a pair of wind turbines 60 which are arranged side by side over the outlet 32 and rotate about the horizontal shafts by the wind blowing out from the outlet 32, and the power generators 70 which generate power by the rotation of the pair of wind turbines 60, and the space above the pair of wind turbines 60 is opened so that the wind that has blown out from the outlet 32 blows through upward (see Fig. 1).

The openable windows 52 which receive the wind blowing from a certain direction outside the wind tunnel tube 30 on the front faces (outer faces) of the openable windows 52 move around the horizontal shafts to place the openings 34 in open states. Whereas, in inclined positions where the upper sides of the openable windows 52 come inside the wind tunnel tube 30, the other openable windows 52 which receive the wind flowing from inside the wind tunnel tube 30 on the back sides (inner faces) of the other openable windows 52 have the openings 34 in closed states. In other words, the wind tunnel tube 30 causes only the openings 34 on the face (windward side face) receiving the wind from the outside to be open and causes those on the other sides to be closed, and further has the bottom end closed with the openable windows 52 in inclined positions with the upper sides of the openable windows 52 coming inside the wind tunnel tube 30. This enables the wind taken into the wind tunnel tube 30 to rise up to blow out from the outlet 32 on the top end. Then, the pair of wind turbines 60 arranged side by side over the outlet 32 is rotated by the wind which is blown out from the outlet 32 to blow through upward thereby allowing the power generator 70 to generate power by the rotation of the wind turbines 60.

Here, since the air pressure at the outlet 32 at the top end of the wind tunnel tube 30 is lower than that at the bottom end of the wind tunnel tube 30, buoyant force created by the pressure difference in the vertical direction gives an effect on the wind taken into the wind tunnel tube 30. And, the wind taken into the wind tunnel tube 30 is blown out from the outlet 32 to blow upward through from the top part of the tower body 20, because the top part of the tower body 20 is open. Further, a wide area from the lower part to the upper part of the wind tunnel tube 30 takes in and collects the wind. Hereby, the wind is restrained from residing or slowing down inside the wind tunnel tube 30 so that the wind velocity at the outlet 32 is restrained from being reduced. Hereby, the wind force can be effectively utilized for generating power.

Further, the present invention achieves the configuration where the openings 34 are provided on the entire circumferential area of the wind tunnel tube 30, and where only the openings 34 in the area which receives the wind (windward side area) have the openable windows 52 open, while the openings 34 in the area which do not receive the wind have the openable windows 52 closed. This allows the wind power to be utilized to generate power regardless of the direction in which the wind is blowing.

Furthermore, in the wind power generating device 10 according to the present embodiment, an opening 64 being the wind communicating opening is provided to each vane 62 of the wind turbine 60 so that the wind which has blown out from the outlet 32 of the wind tunnel tube 30 passes through the openings 64 to blow through. Hereby, the wind is restrained from residing at the location the wind turbines 60 thereby allowing to effectively restrain the wind velocity from being reduced at the outlet 32.

Yet furthermore, the wind power generating device 10 according to the present embodiment has a wind guide part 40, provided around the wind tunnel tube 30, guiding the wind to the opening 34 being the opening for taking in the wind. Hereby, the wind can be collected and taken into the wind tunnel tube 30 so that the wind power can be effectively utilized for generating power.

Even furthermore, the wind power generating device 10 according to the present embodiment has openable windows 52 arranged to the openings 34 in a manner movable around the horizontally positioned support shaft 54. And the shaft 58 being the first rotational movement limiting member is positioned facing the back face of the openable windows 52 inside the wind tunnel tube 30 to stop at the open position the rotating movement from the closed position to the open position of the openable window 52. Meanwhile, the weight 56 which operates as the second rotational movement limiting member is positioned at a lower part on the front face of the openable window 52 to stop at the closed position the rotating movement from the open position to the closed position of the openable window 52. Hereby, the openable window 52 that has received the wind from the outside of the wind tunnel tube 30 to be rotated from the closed position can be stopped at the open position and the openable window 52 that has received the wind from the inside of the wind tunnel tube 30 can be stopped at the closed position.

Even furthermore, the aforementioned weight 58 moving the openable window 52 to rotate from the open position to the closed position by the self-weight of the weight 58 allows the openable window 52 which is no longer receiving the wind from the outside of the wind tunnel tube 30 to automatically rotate toward the closed position. Meanwhile, an openable window 52 that does not receive the wind from the outside of the wind tunnel tube 30 can be kept at the closed position.

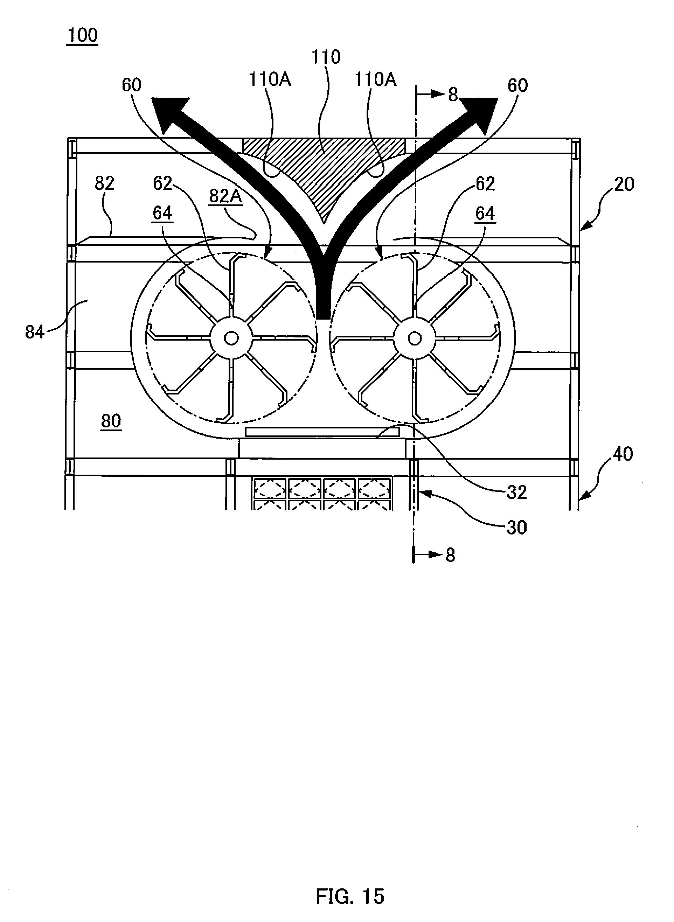

Fig. 15 is a vertical sectional diagram illustrating an upper portion of the wind power generating device 100 according to another embodiment. As shown in this figure, the wind power generating device 100 is provided with a rain cover 110 over the pair of wind turbines 60. This rain cover 110 is mounted to the top portion of the tower body 20 and positioned to face the opening 82A of the roof 82 to prevent rain from falling into the wind tunnel tube 30 through the opening 82A. Here, the rain cover 110 is a member whose section is in a reversed triangular shape when looking in the shaft directions of the wind turbines 60 with the inclined faces 110A on the two sides thereof curved to allow the wind that has blown through the opening 82A to blow through obliquely upward.

Hereinabove, description of the embodiments of the present invention has been given, however, the above embodiments are merely for facilitating the understanding of the present invention and is not to be interpreted as limiting the present invention. The present invention can be altered and improved without departing from the gist thereof and equivalents are intended to be embraced therein. For example, the sectional shape of the wind tunnel tube 30 was made in a rectangular form and the sectional shape of the wind guide part 40 was made in an octagonal form in the above embodiment, however, the shapes may be changed as appropriate. Further, the positions and the like of the openings 34 and the openable windows 52 on the peripheral walls of the wind tunnel tube 30 may be changed as appropriate.

### [Reference Signs List]

1 model, 2 fan, 10 wind power generating device, 20 tower body, 30 wind tunnel tube, 32 outlet, 34 opening, 40 wind guide part, 42 wind guide opening, 46 partitioning plate, 50 wind inlet part, 52 openable window, 54 support shaft, 55 bearing, 56 weight, 58 shaft, 59 bracket, 60 wind turbine, 62 vane, 64 opening, 70 power generator, 80 power generator room, 82 roof, 82A opening, 84 peripheral wall, 100 wind power generating device, 110 rain cover, 110A inclined face

## Claims

1. A wind power generating device (10, 100) comprising:
a tubular wind tunnel tube (30) being provided with a plurality of wind inlets (50) horizontally and vertically over an entire circumferential area of a peripheral wall (84), having a bottom end closed, and being provided with a wind outlet (32) at a top end;
a plurality of openable windows (52) having the inlets (50) placed in open states by a wind received from an outside of the wind tunnel tube (30) and having the inlets (50) placed in closed states by a wind received from an inside of the wind tunnel tube (30) ;
a wind turbine (60) being positioned on an upper side of the wind tunnel tube (30) and being made to rotate by a wind blowing out from the outlet (32); and
a power generator (70) being made to generate power by the rotation of the wind turbine (60).

2. A wind power generating device (10, 100) comprising:
a tubular wind tunnel tube (30) being provided with a plurality of wind inlets (50) horizontally and vertically from a bottom part to a top part over an entire circumferential area of a peripheral wall (84), having a bottom end closed, and being provided with a wind outlet (32) at a top portion;
a plurality of openable windows (52) being moved around horizontal shafts (54) to inclined positions with upper sides coming to an inside of the wind tunnel tube (30) to place the inlets (50) in open states by a wind received from an outside of the wind tunnel tube (30) and having the inlets (50) placed in closed states by a wind received from the inside of the wind tunnel tube (30);
a pair of wind turbines (60) being positioned side by side above the outlet (32) and made to rotate about horizontal shafts (54) by a wind that has blown out from the outlet (32); and
a power generator (70) being made to generate power by the rotation of the pair of wind turbines (60), wherein
an upper part of the pair of wind turbines (60) is open such that the wind that has blown out from the outlet (32) blows through upward.

3. The wind power generating device (10, 100) according to claim 2, wherein a rain cover (110) is provided over the pair of wind turbines (60) such that the rain cover (110) allows the wind having blown out from the outlet (32) to blow through obliquely upward.

4. A wind power generating device (10, 100) comprising:
a tubular wind tunnel tube (30) being provided with a plurality of wind inlets (50) horizontally and vertically over an entire circumferential area of a peripheral wall (84), having a bottom end closed, and being provided with a wind outlet (32) at a top end;
a plurality of openable windows (52) rotating around horizontal shafts (54) to inclined positions with upper sides coming to an inside of the wind tunnel tube (30) to place the inlets (50) in open states by a wind received from an outside of the wind tunnel tube (30) and having the inlets (50) placed in closed states by a wind received from the inside of the wind tunnel tube (30);
a wind turbine (60) being positioned on an upper side of the wind tunnel tube (30) and being made to rotate by a wind blowing out from the outlet (32); and
a power generator (70) being made to generate power by the rotation of the wind turbines (60);
the wind power generating device (10, 100) further including:
a rotation shaft (54), horizontally positioned to an inner face on a lower side of the openable window (52), for rotatably supporting the openable window (52),
a rotational movement limiting member (58) being positioned on an inner side as well as on an upper side in the wind tunnel tube (30) with regard to the rotation shaft (54), and being made to stop at an open position a rotational movement of the openable window (52) from a closed position, and
a weight (56) being attached to a lower part of an outer face of the openable window (52) with a bottom end being located on a side lower than a bottom end of the openable window (52), and being made to stop at the closed position a rotational movement of the openable window (52) from the open position by a lower part coming into contact with a bottom edge of the inlet (50) and being made to rotate the openable window (52) from the open position to the closed position by a self-weight.

5. The wind power generating device (10, 100) according to any one of claims 1 to 4, wherein a wind communicating opening is provided to a vane (62) of the wind turbine (60).

6. The wind power generating device (10, 100) according to any one of claims 1 to 5 further comprising a wind guide part (40) that is provided in a periphery of the wind tunnel tube (30) and is made to guide a wind to the plurality of inlets (50).
